# EUROPÄISCHE PATENTSCHRIFT

(11) **EP 2 830 530 B1**
(45) Veröffentlichungstag und Bekanntmachung des Hinweises auf die Patenterteilung: **22.06.2016**
(21) Anmeldenummer: 13719742.2
(22) Anmeldetag: 02.04.2013
(51) Int. Cl.: A61C 1/18, A61C 1/00, A61C 1/08

(54) **ZAHNÄRZTLICHES HANDSTÜCK MIT WÄLZLAGER**
DENTAL HANDPIECE HAVING A ROLLING BEARING
PIÈCE À MAIN DENTAIRE AVEC PALIER À ROULEMENT

(30) Priorität: 30.03.2012 DE 102012205275
(43) Veröffentlichungstag der Anmeldung: 04.02.2015
(73) Patentinhaber: Sirona Dental Systems GmbH, 64625 Bensheim (DE)
(72) Erfinder: BIERBAUM, Thomas, 64625 Bensheim (DE); REIN, Matthias, 64653 Lorsch (DE); SUTTER, Ralf, 69469 Weinheim (DE); GOISSER, Siegfried, 64683 Einhausen (DE)
(74) Vertreter: Sommer, Peter
(86) Internationale Anmeldenummer: PCT/EP2013/056878
(87) Internationale Veröffentlichungsnummer: WO 2013/144364

(56) Entgegenhaltungen:
- EP-A1- 0 527 473
- EP-A2- 0 689 801
- DE-A1- 10 208 692
- US-A- 3 218 028
- US-A- 3 637 050
- US-A1- 2006 234 186

## Beschreibung

### Technisches Gebiet

Die Erfindung betrifft ein zahnärztliches Handstück oder ein Winkelstück mit einem in einem Kopfgehäuse befindlichen Antrieb eines Werkzeugs sowie mindestens eine im Kopfgehäuse angeordnete medienführenden Leitung mit einer Austrittsöffnung zum Werkzeug hin und weist eine in einer Antriebskammer angeordnete Werkzeugaufnahme auf, welche auf einer dem Werkzeug zugewandten Seite der Antriebskammer mittels eines Wälzlagers in einem Widerlager des Kopfgehäuses drehbar gelagert ist.

### Stand der Technik

Aus der EP 0 630 620 B1 ist ein zahnärztlicher Turbinenantrieb bekannt, dessen Antriebseinheit mit O-Ringen schwingungsgedämpft im Kopfgehäuse fixiert ist. Die Lager weisen im Außenlaufring einen Absatz auf, gegen den der O-Ring radial anliegt und an dessen Übergang sich der O-Ring axial abstützt.

Aus der DE 100 25 416 A1 ist ein zahnärztliches Handstück bekannt, bei dem eine elastische radiale Lagerung einer Rotorwelle mittels eines O-Rings erfolgt und die elastische axiale Lagerung mittels einer Wellfeder.

EP 0 527 473 A1 offenbart ein zahnärztliches Handstück mit Turbineneinsatz, umfassend ein Turbineneinsatzgehäuse, worin ein Dentalfräser lösbar gehalten wird. Das zahnärztliche Handstück weist weiterhin einen Fluiddurchlass auf, der sich zwischen einen Innenfläche des Kopfgehäuses und einer Außenfläche des Turbineneinsatzgehäuses gebildet ist. US 2006/0234186 A1 offenbart ein zahnärztliches Handstück umfassend ein Rotor, das durch ein Kugellager abgestützt ist, wobei eine Kugellageranordnung mindestens einen inneren Laufring und einen äußeren Laufring umfasst. Seitlich am Kugellager ist darüber hinaus eine Lagerplatte angeordnet, die in den äußeren Laufring integriert ist.

US 3,218,028 A offenbart einen Zahnarztbohrer mit einer Luft-Turbine, wobei der Rotor mittels einer Turbine angetrieben wird. Zur Reduktion des Geräuschpegels wird eine effektive Schalisolierung der rotierenden Teile des zahnärztlichen Handstücks verwendet. Dabei wird eine O-förmige elastische Montagehülse verwendet, die die Vibrationen des Lagers dämpft.

### Offenbarung der Erfindung

Das erfindungsgemäße zahnärztliche Handstück weist einem in einem Kopfgehäuse befindlichen Antrieb eines Werkzeugs sowie mindestens eine im Kopfgehäuse angeordnete medienführenden Leitung mit einer Austrittsöffnung zum Werkzeug hin und einen in einer Antriebskammer angeordnete Werkzeugaufnahme auf, welche auf einer dem Werkzeug zugewandten Seite der Antriebskammer mittels eines Wälzlagers in einem Widerlager des Kopfgehäuses drehbar gelagert ist. Das Wälzlager weist einen Außenlaufring auf, der im Bereich einer Laufbahn radial in dem Widerlager gegen das Kopfgehäuse abgestützt ist und der einen Teilbereich aufweist, dessen Außendurchmesser gegenüber dem Außendurchmesser im Bereich der Laufbahn verringert ist. Das Kopfgehäuse weist einen Gehäusevorsprung auf, der sich in den Bereich des verringerten Außendurchmessers hinein erstreckt und die medienführende Leitung verläuft zumindest teilweise durch diesen Gehäusevorsprung. Der Außenlaufring ist axial verschiebbar gegen das Kopfgehäuse abgestützt und weist eine mit diesem verbundene Deckscheibe auf, die sich vom Außenlaufring ausgehend in Richtung zu einem auf der Werkzeugaufnahme angeordneten Innenlaufring erstreckt, wobei zwischen der Deckscheibe und dem Kopfgehäuse ein in axialer Richtung wirkendes Vorspannmittel angeordnet ist, das über die Deckscheibe den Außenlaufring mit einer axialen Vorspannung beaufschlagt, wobei das Kopfgehäuse einen sich an den ersten Gehäusevorsprung anschließenden weiteren Gehäusevorsprung aufweist, der sich gegenüber dem Außenlaufring an seinem die Deckscheibe tragenden Ende radial in Richtung zur Längsachse hin erstreckt und dass die medienführende Leitung ebenfalls zumindest teilweise durch diesen zweiten Gehäusevorsprung verläuft.

Dies hat den Vorteil, dass die Austrittsöffnung der medienführenden Leitung näher an das Werkzeug geführt werden kann, ohne die Bauhöhe zu vergrößern bzw. um eine Verringerung des Bauvolumens herbeizuführen.

Der Vorteil des axialen Vorspannmittels ist, dass auch im Fall des axialen Vorspannmittels des Lagers die Bauhöhe nicht vergrößert werden muss und insbesondere Platz für Kühleinrichtungen wie einem Spray geschaffen wird.

Bei einer Alternative weist das erfindungsgemäße zahnärztliche Handstück einem in einem Kopfgehäuse befindlichen Antrieb eines Werkzeugs sowie mindestens eine im Kopfgehäuse angeordnete medienführenden Leitung mit einer Austrittsöffnung zum Werkzeug hin und einen in einer Antriebskammer angeordnete Werkzeugaufnahme auf, welche auf einer dem Werkzeug zugewandten Seite der Antriebskammer mittels eines Wälzlagers in einem Widerlager des Kopfgehäuses drehbar gelagert ist. Das Wälzlager weist einen Außenlaufring auf, der im Bereich einer Laufbahn radial in dem Widerlager gegen das Kopfgehäuse abgestützt ist und der einen Teilbereich aufweist, dessen Außendurchmesser gegenüber dem Außendurchmesser im Bereich der Laufbahn verringert ist. Das Kopfgehäuse weist einen Gehäusevorsprung auf, der sich in den Bereich des verringerten Außendurchmessers hinein erstreckt und die medien-führende Leitung verläuft zumindest teilweise durch diesen Gehäusevorsprung. Der Außenlaufring ist dabei axial verschiebbar gegen das Kopfgehäuse abgestützt und weist eine mit diesem verbundene Deckscheibe auf, die sich vom Außenlaufring ausgehend in Richtung zu einem auf der Werkzeugaufnahme angeordneten Innenlaufring erstreckt, wobei zwischen der Deckscheibe und dem Kopfgehäuse ein in axialer Richtung wirkendes Vorspannmittel angeordnet ist, das über die Deckscheibe den Außenlaufring mit einer axialen Vorspannung beaufschlagt, wobei die Deckscheibe einen sich in axialer Richtung erstreckenden Fortsatz aufweist, der auf seiner Innenseite mit dem Innenlaufring einen Dichtspalt bildet und dessen Außenseite als eine axiale Führung für das Vorspannmittel ausgebildet ist.

Vorteilhafterweise kann der Außendurchmesser des Vorsprungs gegenüber dem Außendurchmesser im Bereich der Laufbahn um einen Betrag t1 von 0,1 mm bis 0,5 mm verringert sein, vorzugsweise 0,2 bis 0,3 mm. Damit verringert sich der Außendurchmesser in dem Bereich des Vorsprungs um 0,2 mm - 1,0 mm, vorzugsweise um 0,4 mm - 0,6 mm gegenüber dem Außendurchmesser im Bereich der Laufbahn.

Es hat sich herausgestellt, dass eine derartige Verringerung bereits eine Verbesserung in der Herstellbarkeit und der Platzierung der Austrittsöffnung der medienführenden Leitung zur Folge hat.

### Kurze Beschreibung der Zeichnungen

Das erfindungsgemäße Handstück wird anhand der Zeichnung erläutert. Es zeigen:
- Fig. 1: ein zahnärztliches Handstück mit einer medienführenden Leitung in Form eines Sprays nach dem Stand der Technik;
- Fig. 2: einen Ausschnitt aus Fig. 1 eines Kopfgehäuses im Bereich eines Werkzeugs mit einer erfindungsgemäßen Ausbildung des Wälzlagers und des Kopfgehäuses;
- Fig. 3: eine Vergrößerung aus Fig. 2 im Bereich der Lagerung des Werkzeugs im Kopfgehäuse;
- Fig. 4: eine alternative Ausbildung des Wälzlagers und des Kopfgehäuses;
- Fig. 5: die Ausgestaltung nach Fig. 4 im Detail,
- Fig. 6: eine weitere Ausgestaltung des Kopfgehäuses. Ausführungsform(en) der Erfindung

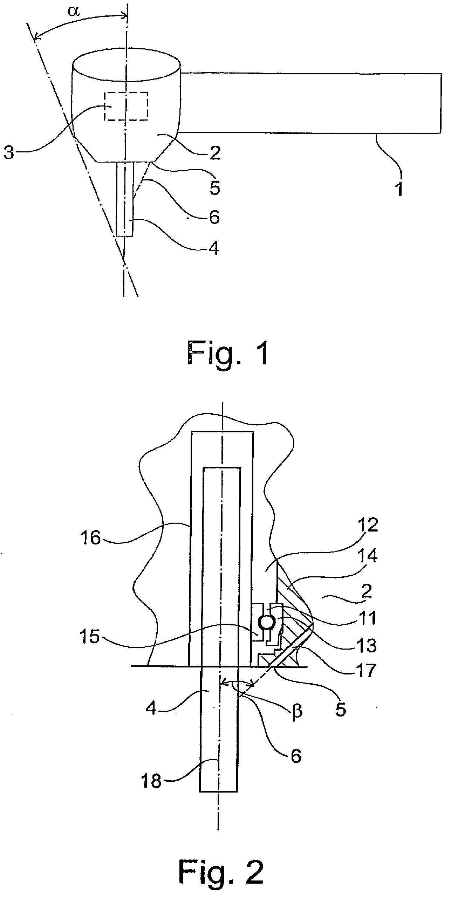

In Fig. 1 ist ein zahnärztliches Handstück 1 dargestellt, welches ein Kopfgehäuse 2 mit einem Antrieb 3 in Form einer Turbine oder einer Getriebewelle für ein Bearbeitungswerkzeug 4 aufweist. Zur Kühlung des Werkzeugs 4 oder zur Beleuchtung der mit dem Werkzeug behandelten Stelle ist im Kopfgehäuse 2 eine Austrittsstelle 5 für einen Wasserstrahl 6 oder für einen Luft- oder Lichtstrahl vorgesehen. Diese Austrittsstelle 5 soll für den Fall, dass als Medium Wasser, Luft oder Licht verwendet wird, möglichst nahe am Werkzeug 4 erfolgen, um Abschattungen des Wasserstrahls oder des Lichtstrahls zu verringern und die Ausleuchtung oder Kühlung zu verbessern, insbesondere dann, wenn in engen Kavitäten gearbeitet wird. Der Sichtwinkel α nach der Norm DIN/EN/ISO 7785-1 ist bezogen auf eine Längsachse 18 angegeben.

Das Werkzeug 4 wird mittels des Antriebs 3 in Rotation versetzt, wozu es wie in Fig. 2 dargestellt über ein Wälzlager 11 gegen das Kopfgehäuse 2 abgestützt ist. Das Wälzlager 11 ist in einer Antriebskammer 12 angeordnet und umfasst einen Außenring 13, der in einem Widerlager 14 radial gegen das Kopfgehäuse 2 abgestützt ist. Der Innenlaufring 15 des Wälzlagers 11 ist auf einer Werkzeugaufnahme 16 angeordnet, in der das Werkzeug 4 befestigt ist. Bereits in dieser Darstellung ist zu erkennen, dass das Kopfgehäuse eine medienführende Leitung 17 aufweist, die zu der Austrittsöffnung 5 führt und die aufgrund des Herstellungsvorgangs als geradlinige Bohrung ausgeführt ist. Die Leitung 17 ist dabei gegenüber der Längsachse 18 des Bearbeitungswerkzeugs 4 um einen Winkel β geneigt, wobei im vorliegenden Fall auch die Richtung des austretenden Strahls 6 diesem Winkel β entspricht.

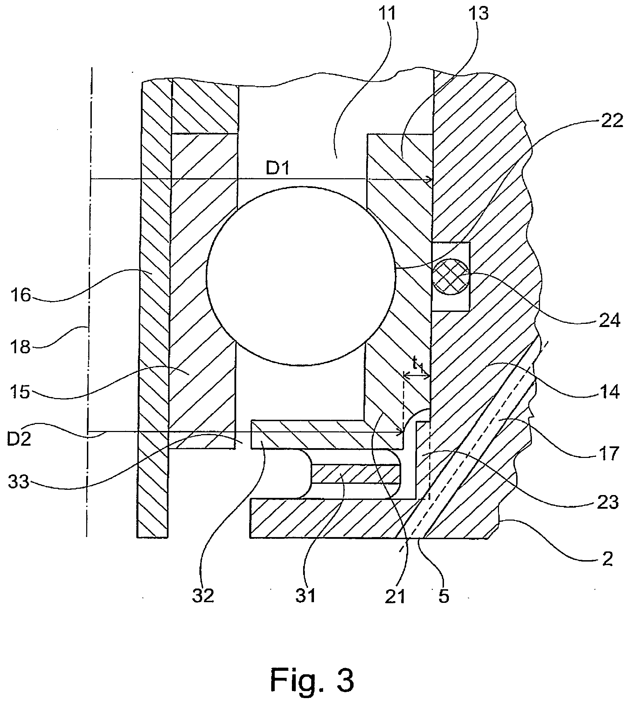

In Fig. 3 ist die besondere Ausgestaltung des Kopfgehäuses 2 im Bereich des Widerlagers 14 dargestellt. Zu erkennen ist, dass der Außenlaufring 13 des Wälzlagers 11 einen Teilbereich 21 aufweist, dessen Außendurchmesser D2 gegenüber dem Außendurchmesser D1 im Bereich der Laufbahn um einen doppelten Betrag t1 verringert ist.

Darüber hinaus weist das Kopfgehäuse 2 im Bereich des Widerlagers 14 einen Gehäusevorsprung 23 auf, der sich in den Bereich des verringerten Außendurchmessers des Außenlaufrings hineinerstreckt und durch die medienführende Leitung 17 zumindest teilweise hindurch läuft. Dies ist angedeutet durch die gestrichelte Fortsetzung des Widerlagers ohne den Gehäusevorsprung 23. Es wird dabei deutlich, dass die Leitung 17 bei einem Widerlager ohne Vorsprung in das Widerlager selbst hinein geöffnet wäre, so dass hier Flüssigkeit austreten könnte.

Der Vorsprung 23 ermöglicht es also, die Leitung 17 näher an die Längsachse 18 zu bringen als dies ohne Vorsprung möglich wäre. Wenn die Austrittsöffnung nicht so weit von der Längsachse entfernt ist, hat das den Vorteil, dass die Abschattung verringert werden, dass die Sicht verbessert wird und dass der Sichtwinkel α nach der Norm DIN/EN/ISO 7785-1 kleiner wird.

Zur Abstützung des Außenlaufrings 13 gegen das Kopfgehäuse 2 kann im Bereich des Widerlagers 14 ein mit einer Vorspannkraft verformter elastischer O-Ring 24 vorgesehen sein, der in etwa auf der Höhe der Laufbahn 22 liegt. Dadurch wird eine radiale Beweglichkeit des Wälzlagers bzw. ein Spielausgleich der Bauteile zueinander ermöglicht.

In axialer Richtung ist der Außenlaufring über den O-Ring hinweg axial verschiebbar und kann über eine Vorspannfeder 31, die sich axialer Richtung gegen die Unterseite des Kopfgehäuses 2 abstützt, verspannt sein.

Um eine Auflage des Vorspannmittels 31 an dem Außenring zu ermöglichen, kann der Außenring 13 in dem Teilbereich 21 eine mit diesem verbundene Deckscheibe 32 aufweisen. Die Deckscheibe 32 kann sich unter Ausbildung eines Ringspalts 33 bis zu einem auf der Werkzeugaufnahme 16 angeordneten Innenlaufring erstrecken. Mittels des Ringspaltes kann eine gewisse Abdichtung des Wälzlagers erreicht werden.

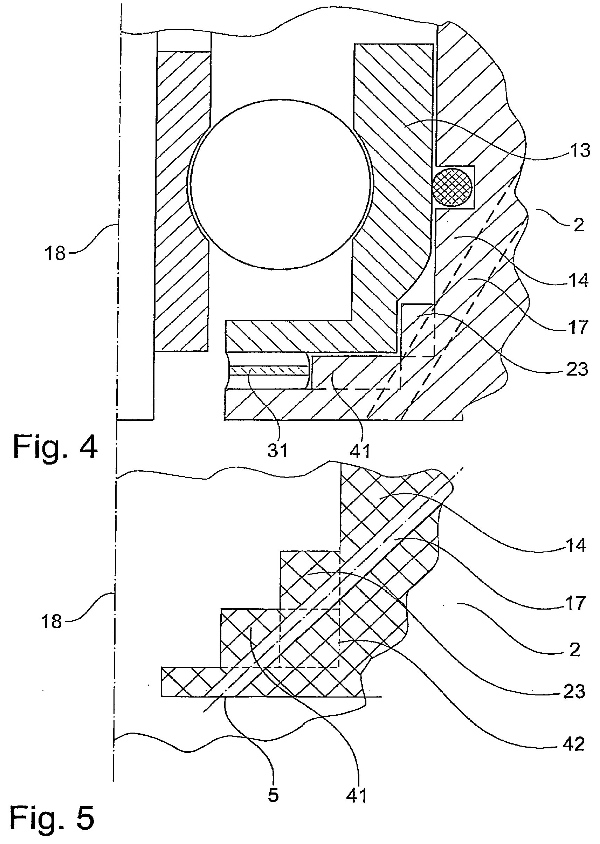

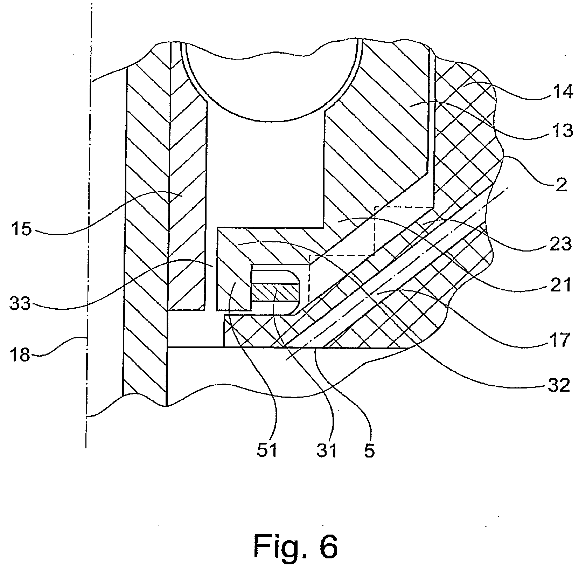

In den Fig. 4 und 5 ist ein weiteres Ausführungsbeispiel dargestellt, bei dem auch im Bereich der Anordnung des Vorspannmittels ein weiterer Gehäusevorsprung vorgesehen ist, um die medienführende Leitung noch näher an die Längsachse zu bringen. Statt mehrerer Stufen ist auch eine Schräge vorsehbar, siehe später zu Fig. 6.

In Fig. 4 ist das Kopfgehäuse 2 im Bereich des Widerlagers 14 für den Außenlaufring 13 zusätzlich zu dem Vorsprung 23 mit einem weiteren Vorsprung 41 versehen, der sich in radialer Richtung zur Längsachse 18 hin unterhalb des Außenlaufrings 13 erstreckt. Anders als beim Vorsprung 23 ist der Außenlaufring 13 nicht entsprechend des Vorsprungs 41 ausgebildet, das heißt er berücksichtigt nicht den Vorsprung 41. Der Außenlaufring 13 des Lagers kann im Bereich des Vorsprungs 23 auch eine Fase aufweisen, da hier keinerlei Abstützungsfunktionen gegenüber dem Gehäuse erforderlich sind.

Der Vorsprung 41 beschränkt den für das Vorspannmittel 31 zur Verfügung stehende Bauvolumen und stellt gleichzeitig einen Axialanschlag für den Außenlaufring 13 dar und stellt sicher, dass das Vorspannmittel 31 nicht unter axialer Krafteinwirkung über den Außenlaufring 13 vollständig zusammengedrückt und dadurch beschädigt wird.

Es ist zu erkennen, dass die Leitung 17 durch den weiteren radialen Vorsprung 41 noch näher zur Längsachse 18 gerückt werden kann, was im Detail auch in Fig. 5 dargestellt ist, wobei auf die Darstellung des Außenlaufrings und des Vorspannmittels verzichtet wurde. Die Austrittsstelle 5 der Leitung 17 kann dadurch weiter zur Längsachse 18 rücken als dies der Fall wäre, wenn auf den Vorsprung 23 oder 41 verzichtet würde, was durch die gestrichelte Kontur 42 im Widerlager 14 des Kopfgehäuses 2 dargestellt wird.

In Fig. 6 ist ein Kopfgehäuse 2 mit einem sich schräg in den Bereich des verringerten Außendurchmessers des Außenlaufrings 13 erstreckenden Gehäusevorsprung 23 dargestellt, wobei auch der Außenlaufring 13 eine Schräge aufweist. An dem der Längsachse 18 zugewandten Ende der Deckscheibe 32 ist ein axialer Fortsatz 51 vorgesehen, der als radialer Innenanschlag für das Vorspannmittel in Form einer Wellfeder 31 dient und diese axial führt. Der Spalt 33 zwischen dem Außenlaufring 13 und dem Innenlaufring 15 wird dadurch länger, wodurch sich die Dichtwirkung verbessert.

In dem schrägen Gehäusevorsprung 23 ist wiederum eine Leitung 17 mit der Austrittsstelle 5 vorhanden. Da an diesem schrägen Vorsprung kein axialer Anschlag des Außenlaufrings 13 mehr vorhanden ist, wird ein Anschlag des Außenlaufrings 13 gegenüber dem Kopfgehäuse über den Fortsatz 51 hergestellt.

## Patentansprüche

1. Zahnärztliches Handstück (1) mit einem in einem Kopfgehäuse (2) befindlichen Antrieb (3) eines Werkzeugs (4), aufweisend mindestens eine im Kopfgehäuse angeordnete medienführenden Leitung mit einer Austrittsöffnung zum Werkzeug hin und einen in einer Antriebskammer angeordnete Werkzeugaufnahme (16), welche auf einer dem Werkzeug zugewandten Seite der Antriebskammer mittels eines Wälzlagers (11) in einem Widerlager (14) des Kopfgehäuses (2) drehbar gelagert ist, wobei das Wälzlager einen Außenlaufring (13) aufweist, der im Bereich einer Laufbahn (22) radial in dem Widerlager (14) gegen das Kopfgehäuse (2) abgestützt ist und dass der Außenlaufring (13) einen Teilbereich (21) aufweist, dessen Außendurchmesser D2 gegenüber dem Außendurchmesser D1 des Außenlaufrings im Bereich der Laufbahn (22) verringert ist, wobei das Kopfgehäuse einen Gehäusevorsprung (23) aufweist, der sich in den Bereich des verringerten Außendurchmessers D2 hinein erstreckt und dass die medienführende Leitung (17) zumindest teilweise durch diesen Gehäusevorsprung (23) verläuft, wobei der Außenlaufring (13) axial verschiebbar gegen das Kopfgehäuse (2) abgestützt ist **dadurch gekennzeichnet, dass** der Außenlaufring (13) eine mit diesem verbundene Deckscheibe (32) aufweist, die sich vom Außenlaufring (13) ausgehend in Richtung zu einem auf der Werkzeugaufnahme (16) angeordneten Innenlaufring (15) erstreckt, wobei zwischen der Deckscheibe (32) und dem Kopfgehäuse (2) ein in axialer Richtung wirkendes Vorspannmittel (31) angeordnet ist, das über die Deckscheibe (32) den Außenlaufring (13) mit einer axialen Vorspannung beaufschlagt, wobei das Kopfgehäuse (2) einen sich an den ersten Gehäusevorsprung (23) anschließenden weiteren Gehäusevorsprung (41) aufweist, der sich gegenüber dem Außenlaufring (14) an seinem die Deckscheibe (32) tragenden Ende radial in Richtung zur Längsachse (18) hin erstreckt und dass die medienführenden Leitung ebenfalls zumindest teilweise durch diesen zweiten Gehäusevorsprung (41) verläuft.

2. Zahnärztliches Handstück (1) mit einem in einem Kopfgehäuse (2) befindlichen Antrieb (3) eines Werkzeugs (4), aufweisend mindestens eine im Kopfgehäuse angeordnete medienführenden Leitung mit einer Austrittsöffnung zum Werkzeug hin und einen in einer Antriebskammer angeordnete Werkzeugaufnahme (16), welche auf einer dem Werkzeug zugewandten Seite der Antriebskammer mittels eines Wälzlagers (11) in einem Widerlager (14) des Kopfgehäuses (2) drehbar gelagert ist, wobei das Wälzlager einen Außenlaufring (13) aufweist, der im Bereich einer Laufbahn (22) radial in dem Widerlager (14) gegen das Kopfgehäuse (2) abgestützt ist und dass der Außenlaufring (13) einen Teilbereich (21) aufweist, dessen Außendurchmesser D2 gegenüber dem Außendurchmesser D1 des Außenlaufrings im Bereich der Laufbahn (22) verringert ist, wobei das Kopfgehäuse einen Gehäusevorsprung (23) aufweist, der sich in den Bereich des verringerten Außendurchmessers D2 hinein erstreckt und dass die medienführende Leitung (17) zumindest teilweise durch diesen Gehäusevorsprung (23) verläuft, wobei der Außenlaufring (13) axial verschiebbar gegen das Kopfgehäuse (2) abgestützt ist **dadurch gekennzeichnet, dass** der Außenlaufring (13) eine mit diesem verbundene Deckscheibe (32) aufweist, die sich vom Außenlaufring (13) ausgehend in Richtung zu einem auf der Werkzeugaufnahme (16) angeordneten Innenlaufring (15) erstreckt, wobei zwischen der Deckscheibe (32) und dem Kopfgehäuse (2) ein in axialer Richtung wirkendes Vorspannmittel (31) angeordnet ist, das über die Deckscheibe (32) den Außenlaufring (13) mit einer axialen Vorspannung beaufschlagt, wobei die Deckscheibe (32) einen sich in axialer Richtung erstreckenden Fortsatz (51) aufweist, der auf seiner Innenseite mit dem Innenlaufring einen Dichtspalt (33) bildet und dessen Außenseite als eine axiale Führung für das Vorspannmittel ausgebildet ist.

3. Zahnärztliches Handstück nach Anspruch 1 oder 2, **dadurch gekennzeichnet, dass** der Außendurchmesser D2 des Vorsprungs (23) gegenüber dem Außendurchmesser D1 im Bereich der Laufbahn um einen Betrag von 0,2 mm bis 1,0 mm verringert ist, vorzugsweise um 0,4 mm - 0,6 mm.

4. Zahnärztliches Handstück nach Anspruch 1 oder 2, **dadurch gekennzeichnet, dass** sich der Teilbereich (21) des Außenlaufrings (13) konisch verjüngt und dass sich der Gehäusevorsprung (23) des Kopfgehäuses ebenfalls konisch verjüngt und dass in diesem Gehäusevorsprung (23) die medienführende Leitung (17) verläuft.

## Claims

1. A dental handpiece (1) with a drive (3), located in a head housing (2), of a tool (4) having at least one media-conducting line arranged in the head housing with an outlet opening toward the tool and a tool seat (16), which is arranged in a drive chamber and rotatably mounted on a side of the drive chamber facing the tool by means of a roller bearing (11) in a thrust bearing (14) of the head housing (2), wherein the roller bearing has an outer raceway (13) which, in the area of a track (22), radially abuts the head housing (2) in the thrust bearing (14), and the outer raceway (13) has a section (21) whose outer diameter D2 is smaller than the outer diameter D1 of the outer raceway in the area of the track (22), wherein the head housing has a housing projection (23) which extends into the area of the reduced outer diameter D2, and the media-conducting line (17) runs at least partially through this housing projection (23), wherein the outer raceway (13) abuts the head housing (2) in an axially movable manner, **characterized in that** the outer raceway (13) has a cover disc (32) that is connected thereto and extends from the outer raceway (13) toward an inner raceway (15) arranged on the tool seat (16), wherein between the cover disc (32) and the head housing (2), pretensioning means (31) are arranged which act in an axial direction and apply axial pretension via the cover disc (32) to the outer raceway (13), wherein the head housing (2) has an additional housing projection (41) adjoining the first housing projection (23) and extending radially toward the longitudinal axis (18) with respect to the outer raceway (14) at its end bearing the cover disc (32), and that the media-conducting line also runs at least partially through this second housing projection (41).

2. A dental handpiece (1) with a drive (3), located in a head housing (2), of a tool (4) having at least one media-conducting line arranged in the head housing with an outlet opening toward the tool and a tool seat (16), which is arranged in a drive chamber and is rotatably mounted on a side of the drive chamber facing the tool by means of a roller bearing (11) in a thrust bearing (14) of the head housing (2), wherein the roller bearing has an outer raceway (13) which, in the area of a track (22), radially abuts the head housing (2) in the thrust bearing (14), and the outer raceway (13) has a section (21) whose outer diameter D2 is smaller than the outer diameter D1 of the outer raceway in the area of the track (22), wherein the head housing has a housing projection (23) which extends into the area of the reduced outer diameter D2, and the media-conducting line (17) runs at least partially through this housing projection (23), wherein the outer raceway (13) abuts the head housing (2) in an axially movable manner, **characterized in that** the outer raceway (13) has a cover disc (32) that is connected thereto and extends from the outer raceway (13) toward an inner raceway (15) arranged on the tool seat (16), wherein between the cover disc (32) and the head housing (2), pretensioning means (31) are arranged which act in an axial direction and apply axial pretension via the cover disc (32) to the outer raceway (13), wherein the cover disc (32) has a projection (51) that extends in the axial direction and forms a sealing gap (33) on its inside with the inner raceway, and the outside of which is designed as an axial guide for the pretensioning means.

3. The dental handpiece according to claim 1 or 2, **characterized in that** the outer diameter D2 of the projection (23) is less than the outer diameter D1 in the area of the track by an amount of 0.2 mm to 1.0 mm, preferably by 0.4 mm - 0.6 mm.

4. The dental handpiece according to claim 1 or 2, **characterized in that** the section (21) of the outer raceway (13) tapers conically, and that the housing projection (23) of the head housing also tapers conically, and that the media-conducting line (17) runs in this housing projection (23).

## Revendications

1. Pièce à main dentaire (1) munie d'un entraînement (3) d'un outil (4) installé dans un boîtier de tête (2), comportant au moins une conduite acheminant le fluide installée dans le boîtier de tête, présentant une ouverture de sortie en direction de l'outil et un logement de l'outil (16) aménagé dans une chambre d'entraînement qui est logée de manière rotative sur un côté orienté vers l'outil de la chambre d'entraînement par le biais d'un palier à roulement (11) dans une butée (14) du boîtier de tête (2), dans laquelle le palier à roulement présente un chemin de roulement extérieur (13) qui s'appuie de manière radiale dans la zone d'une voie de roulement (22) dans la butée (14) contre le boîtier de tête (2) et le chemin de roulement extérieur (13) comporte une zone partielle (21) dont le diamètre extérieur D2 est réduit par rapport au diamètre extérieur D1 du chemin de roulement extérieur dans la zone de la voie de roulement (22), dans laquelle le boîtier de tête comporte une saillie de boîtier (23) qui s'étend vers l'intérieur de la zone du diamètre extérieur réduit D2 et la conduite acheminant le fluide (17) traverse au moins partiellement cette saillie de boîtier (23), dans laquelle le chemin de roulement extérieur (13) est soutenu de manière décalable sur le plan axial par le boîtier de tête (2), **caractérisée en ce que** le chemin de roulement extérieur (13) comporte un plateau de recouvrement (32) qui est relié à lui, qui s'étend à partir du chemin de roulement extérieur (13) dans la direction d'un chemin de roulement intérieur (15) aménagé sur le logement de l'outil (16), dans laquelle, entre le plateau de recouvrement (32) et le boîtier de tête (2) est placé un moyen de précontrainte (31) agissant dans la direction axiale, qui exerce par le plateau de recouvrement (32) une précontrainte axiale sur le chemin de roulement extérieur (13), dans laquelle le boîtier de tête (2) comporte une autre saillie de boîtier (41) reliée à la première saillie de boîtier (23), qui s'étend de manière radiale dans la direction de l'axe longitudinal (18) par rapport au chemin de roulement extérieur (14) sur son extrémité portant la plaque de recouvrement (32) et **en ce que** la conduite acheminant le fluide s'étend également au moins partiellement à travers cette deuxième saillie de boîtier (41).

2. Pièce à main dentaire (1) munie d'un entraînement (3) d'un outil (4) installé dans un boîtier de tête (2), comportant au moins une conduite acheminant le fluide installée dans le boîtier de tête, présentant une ouverture de sortie en direction de l'outil et un logement de l'outil (16) installé dans une chambre d'entraînement, qui est logée de manière rotative sur un côté orienté vers l'outil de la chambre d'entraînement par le biais d'un palier à roulement (11) dans une butée (14) du boîtier de tête (2), dans laquelle le palier à roulement présente un chemin de roulement extérieur (13) qui s'appuie de manière radiale dans la zone d'une voie de roulement (22) dans la butée (14) contre le boîtier de tête (2) et le chemin de roulement extérieur (13) comporte une zone partielle (21) dont le diamètre extérieur D2 est réduit par rapport au diamètre extérieur D1 du chemin de roulement extérieur dans la zone de la voie de roulement (22), dans laquelle le boîtier de tête comporte une saillie de boîtier (23) qui s'étend vers l'intérieur de la zone du diamètre extérieur réduit D2 et la conduite acheminant le fluide (17) traverse au moins partiellement cette saillie de boîtier (23), dans laquelle le chemin de roulement extérieur (13) est soutenu de manière décalable sur le plan axial par le boîtier de tête (2), **caractérisée en ce que** le chemin de roulement extérieur (13) comporte un plateau de recouvrement (32) qui est relié à lui, qui s'étend à partir du chemin de roulement extérieur (13) en direction d'un chemin de roulement intérieur (15) installé sur le logement d'outil (16), dans laquelle, entre le plateau de recouvrement (32) et le boîtier de tête (2) est placé un moyen de précontrainte (31) agissant dans la direction axiale, qui exerce par le plateau de recouvrement (32) une précontrainte axiale sur le chemin de roulement extérieur (13), le plateau de recouvrement (32) comportant un prolongement (51) s'étendant dans la direction axiale qui constitue sur son côté intérieur avec le chemin de roulement intérieur une fente d'étanchéité (13) et dont le côté extérieur est configuré en tant que guidage axial pour le moyen de précontrainte.

3. Pièce à main dentaire selon la revendication 1 ou 2, **caractérisée en ce que** le diamètre extérieur D2 de la saillie (23) est réduit de 0,2 mm à 1,0 mm, de préférence de 0,4 mm à 0,6 mm, par rapport au diamètre extérieur D1 dans la zone de la voie de roulement.

4. Pièce à main dentaire selon la revendication 1 ou 2, **caractérisée en ce que** la zone partielle (21) du chemin de roulement extérieur (13) se rétrécit de manière conique et **en ce que** la saillie de boîtier (23) du boîtier de tête se rétrécit également de manière conique et **en ce que** la conduite acheminant le fluide (17) s'étend dans cette saillie de boîtier (23).
